# EUROPÄISCHE PATENTSCHRIFT

(11) **EP 0 860 191 B1**
(45) Veröffentlichungstag und Bekanntmachung des Hinweises auf die Patenterteilung: **17.05.2000**
(21) Anmeldenummer: 98102867.3
(22) Anmeldetag: 19.02.1998
(51) Int. Cl.: B01D 35/30

(54) **Kunststoff-Deckel für ein Filtergehäuse**
Plastic cover for filter casing
Couvercle en matière plastique pour boîtier filtrant

(30) Priorität: 20.02.1997 DE 19706644
(43) Veröffentlichungstag der Anmeldung: 26.08.1998
(73) Patentinhaber: MAHLE Filtersysteme GmbH, 70376 Stuttgart (DE)
(72) Erfinder: Fritz, Jochen, 73655 Plüderhausen (DE); Müller, Hubert, 70327 Stuttgart (DE)
(74) Vertreter: Patentanwalts-Partnerschaft Rotermund + Pfusch

(56) Entgegenhaltungen:
- EP-A- 0 330 569
- EP-A- 0 512 639
- EP-A- 0 638 348
- FR-A- 1 532 437
- GB-A- 2 307 422
- US-A- 4 693 820

## Beschreibung

Die Erfindung betrifft einen Kunststoff-Deckel für ein Filtergehäuse gemäß dem Oberbegriff des Anspruchs 1. Derartige Deckel werden verwendet, um die Gehäuse von Flüssigkeitsfiltern, insbesondere Kraftstoff- oder Ölfiltern, dicht zu verschließen.

Oftmals sind zum Betätigen des Deckels relativ große Drehmomente erforderlich. Um diese notwendigen Schraubkräfte in den zum Verschließen des Filtergehäuses dienenden Abschnitt des Deckels einzuleiten, ist auf der Außenseite des Deckels der, insbesondere als Sechskant ausgebildete, Abschnitt zur Krafteinleitung vorgesehen. Bei diesen Deckeln handelt es sich aber um Massenartikel, die preiswert und daher vorzugsweise als Spritzgußteile aus Kunststoff hergestellt werden. Dies hat jedoch den Nachteil, daß zur Einleitung ausreichend großer Schraubkräfte, d.h. Drehmomente, eine massive Ausgestaltung mit großen Wandstärken erforderlich ist, was den Stückpreis deutlich erhöht. Außerdem können nicht alle für diese Anwendungen vorteilhaften Deckel-Formen durch das kostengünstige Spritzgußverfahren hergestellt werden. Alternativ dazu könnten auch Sechskantabschnitte mit größerem, sich möglicherweise über den ganzen Deckel erstreckendem Durchmesser vorgesehen werden. Dies würde jedoch die Verwendung anderer Montage-Werkzeuge mit entsprechend größeren Schlüsselweiten erforderlich machen. Schon aus betriebswirtschaftlichen Erwägungen heraus kann aber von den betroffenen Abnehmern - das sind insbesondere die mit der Wartung der Filter beauftragten Werkstätten - die Neuanschaffung von größeren Werkzeugen nicht erwartet werden.

GB-A-2 307 422 und DE-A-0 512 639 beschreiben einen KunststoffDeckel für ein Filtergehäuse mit einem becherförmigen, auf das Filtergehäuse aufschraubbaren Abschnitt zum Verschließen der Filtergehäuses und einem am Deckel ausgebildete Abschnitt zur Einleitung von Schraubkräften.

Aus der EP-A-0 330 569 ist ein gattungsfremdes, als Wegwerfpatrone konzipiertes Filter bekannt, das ein Filtergehäuse aus Blech aufweist, an dem ein Abschnitt zur Einleitung von Schraubkräften ausgebildet ist und das mit einem Deckel oder Boden fest, z.B. durch Bördelung, verschlossen ist, der dabei einen Abschnitt zum Anschließen des Filters an ein entsprechendes Aggregat aufweist.

Der Erfindung liegt demnach die Aufgabe zugrunde, einen Kunststoff-Deckel für ein Filtergehäuse der vorgenannten Art anzugeben, der einfach herstellbar und unter der Verwendung üblicher Werkzeuge mit hohen Drehmomenten betätigbar ist.

Diese Aufgabe wird erfindungsgemäß durch einen Kunststoff-Deckel mit den Merkmalen des Anspruchs 1 gelöst. Da die Deckel-Bestandteile mit Hilfe dieser Maßnahmen jeweils separat der Spritzgußtechnik zugänglich sind, ist es möglich, die einzelnen Bauteile entsprechend ihrer jeweiligen Funktion - Verschließen, Krafteinleiten - auszugestalten. Während auf diese Weise der Schraubverschluß optimal zur Erzielung einer hohen Dichtigkeit auslegbar und auch an besondere Druckverhältnisse anpaßbar ist, kann die Kappe so ausgestaltet werden, daß größere Schraubkräfte in den Deckel einleitbar sind.

Entsprechend einer bevorzugten Ausführungsform des erfindungsgemäßen Kunststoff-Deckels können zur kraftschlüssigen Verbindung von Kappe und Schraubverschluß an diesen Kraftübertragungsmittel angeordnet sein, mit deren Hilfe die in die Kappe eingeleiteten Drehmomente auf den Schraubverschluß übertragen werden. Insbesondere können die Kraftübertragungsmittel aus zusammenwirkenden Verzahnungen bestehen, was eine gleichmäßige und somit besonders günstige Kraftübertragung entlang des betreffenden Verzahnungs-Umfanges ermöglicht. Vorteilhafterweise können die Kraftübertragungsmittel unter möglichst großem radialen Abstand von der Schraubachse des Deckels angeordnet sein, wodurch größere Schraubmomente übertragbar sind bzw. schon geringere Wandstärken, sowohl bei der Kappe als auch beim Schraubverschluß, ausreichende Stabilität gewährleisten.

Bei einer besonders vorteilhaften Weiterbildung des Kunststoff-Deckels nach der Erfindung können zwischen der Kappe und dem Schraubverschluß Führungsmittel zur koaxialen Ausrichtung der Kraftübertragungsmittel vorgesehen sein. Beispielsweise muß bei der Verwendung einer Verzahnung die Kappe so auf den Schraubverschluß aufgesetzt werden, daß die korrespondierenden Zähne ineinandergreifen. Dies ist jedoch unter Berücksichtigung einer hohen Paßgenauigkeit bzw. eines engen Sitzes der Verzahnungen nicht einfach und kann leicht zu einer Verkantung führen. Mit Hilfe der vorgeschlagenen Maßnahmen kann einerseits einfach eine Stellung aufgefunden werden, in der die Zähne der Verzahnungen ineinander geschoben werden können, andererseits wird dadurch ein Ineinanderschieben der Zähne ohne Verkanten gewährleistet. Vorzugsweise können bei einer besonders preiswerten Ausgestaltung der Erfindung die Führungsmittel aus einem auf die Außenseite des Schraubverschlusses angeformten Rundbolzen und aus einer diesen formschlüssig aufnehmenden Ausnehmung in der Innenseite der Kappe bestehen. Dabei kann diese Ausnehmung auch aus einer an die Innenseite der Kappe angeformten Hülse gebildet sein.

Um auch das Auffinden einer solchen Stellung von Kappe zu Schraubverschluß zu automatisieren, in der sich die Verzahnungen ineinanderschieben lassen, können zwischen der Kappe und dem Schraubverschluß Positioniermittel zur winkligen Ausrichtung der Kraftübertragungsmittel vorgesehen sein, die insbesondere bei der Verwendung eines Rundbolzens als Führungsmittel aus einer daran angeordneten Abflachung und einer daran angepaßten Ausformung der Ausnehmung bestehen.

An einer bevorzugten Ausführungsform des erfindungsgemäßen Kunststoff-Deckels können zur Verbindung von Kappe und Schraubverschluß an diesen Rastmittel vorgesehen sein, die insbesondere aus mehreren, entlang des Umfangs der Kappe federnd angeordneten, radial abstehenden Nasen bestehen, die in entsprechende, entlang des Umfanges des Schraubverschlusses angeordnete Ausnehmungen einrastbar sind. Diese Maßnahmen sichern die Kappe auf dem Schraubverschluß in der Position, in der die Kraftübertragungsmittel zusammenwirken. Die in die Ausnehmungen im Schraubverschluß einrastenden Nasen können dabei jeweils auf separaten, federnden, an der Kappe angeformten Haltebügeln oder entlang einer an die Kappe angeformten Halteschürze angeordnet sein. Entsprechend den jeweiligen Anforderungen können die Rastmittel so ausgebildet sein, daß die Kappe lösbar oder nicht lösbar mit dem Schraubverschluß verbunden ist.

Gemäß einer anderen Fortbildung des Kunststoff-Deckels nach der Erfindung kann der Abschnitt zur Einleitung der Schraubkräfte aus einem zentrisch angeordneten, nach außen abstehenden Vielkant, insbesondere aus einem Sechskant, bestehen, was die Verwendung einfacher, üblicher Werkzeuge ermöglicht.

Im Folgenden wird ein Ausführungsbeispiel des erfindungsgemäßen Kunststoff-Deckels unter Bezugnahme auf die Zeichnung näher beschrieben.

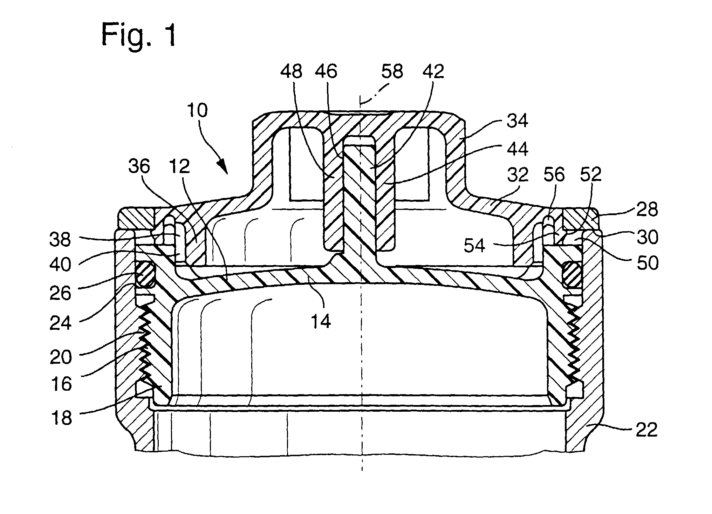

- Fig. 1:: zeigt eine schematische Schnitt-Darstellung eines Kunststoff-Deckels nach der Erfindung, der in ein Filtergehäuse eingeschraubt ist.

Entsprechend Fig. 1 besteht ein erfindungsgemäßer Kunststoff-Deckel 10 aus einem becherförmigen Abschnitt, der zum Verschließen eines nur zum Teil dargestellten Filtergehäuses 22 dient, und aus einem Abschnitt über den die zur Betätigung des Deckels 10 notwendigen Schraubkräfte in den Deckel 10 eingeleitet werden. Der Abschnitt zum Verschließen des Filtergehäuses ist als Schraubverschluß 12 ausgestaltet, der einen Boden 14 aufweist, an den umfangsmäßig eine sich beiderseits des Bodens 14 koaxial zu einer Schraubachse 58 erstreckende, mantelförmige Seitenwand 18 angeformt ist. Diese Seitenwand 18 ist an ihrem, entsprechend Fig. 1, unteren Abschnitt mit einem Außengewinde 16 versehen, das mit einem korrespondierenden Innengewinde 20 des Filtergehäuses 22 zusammenwirkt. Oberhalb des Außengewindes 16 ist in der Seitenwand 18 eine Ringnut 24 ausgespart, in der eine Dichtung 26, insbesondere ein O-Ring, angeordnet ist. An ihrem oberen Ende weist die Seitenwand 18 einen radial nach außen überstehenden Absatz 28 auf, der beim Einschrauben des Schraubverschlusses 12 als Anschlag dient, wobei er an einer Stirnseite 30 am offenen Ende des Filtergehäuses 22 zur Anlage kommt.

Der so gebildete Anschlag bewirkt nicht nur eine Begrenzung der Einschraubtiefe des Schraubverschlusses 12, sondern dient gleichzeitig als Widerlager, um den Schraubverschluß 12 mit hohen Einschraubkräften fest im Filtergehäuse 22 zu verspannen. Beispielsweise um so einen gesicherten Halt des Deckels 10 im Filtergehäuse 22 zu gewährleisten.

Der Abschnitt des Deckels 10, über den die Einleitung der Schraubkräfte erfolgt, ist als Kappe 32 ausgestaltet, auf deren Außenseite, entsprechend Fig. 1 auf deren Oberseite, ein Sechskant 34 angeformt ist. Dieser Sechskant 34 hat übliche Abmessungen und kann folglich mit einem eine gängige Schlüsselweite aufweisenden Schraubenschlüssel zum Befestigen oder Lösen des Deckels 10 betätigt werden. In ihrem Umfangsbereich ist an die Kappe 32 ein nach unten abstehender, ringförmig umlaufender Kragen 36 angeformt, der auf seiner Außenseite mit einer Außenverzahnung 38 versehen ist. Die Außenverzahnung 38 wirkt mit einer korrespondierenden Innenverzahnung 40 zusammen, die auf der Innenseite des oberhalb des Bodens 14 befindlichen Abschnittes der Seitenwand 18 des Schraubverschlusses 12 angeordnet ist. Die so gebildeten Kraftübertragungsmittel bieten aufgrund ihrer von der Schraubachse 58 entfernten Anordnung große Hebelarme und ermöglichen die Übertragung hoher Drehmomente von der Kappe 32 auf den Schraubverschluß 12, wobei die Drehmomente ihrerseits mit üblichen Werkzeugen über den Sechskant 34 in die Kappe 32 eingeleitet werden.

Um das Einführen der Zähne der Außenverzahnung 38 der Kappe 32 zwischen die Zähne der Innenverzahnung 40 des Schraubverschlusses 12 zu vereinfachen, sind zwischen Kappe 32 und Schraubverschluß 12 Führungsmittel angeordnet. Diese Führungsmittel bestehen aus einem konzentrisch zur Schraubachse 58 auf dem Boden 14 des Schraubverschlusses 12 angeformten Rundbolzen 42, der formschlüssig in eine an die Innenseite der Kappe 32 angeformte Hülse 44 eingeführt ist. Im Unterschied zum gezeigten Ausführungsbeispiel kann der Rundbolzen 42 auch in eine entsprechende, in der Innenseite der Kappe 32 ausgesparte Ausnehmung eingebracht sein.

Am Rundbolzen 42 ist an einer Stelle seiner Außenseite, entsprechend Fig. 1 auf seiner linken Außenseite, eine Abflachung 46 vorgesehen, die mit einer entsprechenden Ausformung 48 in der Hülse 44 zusammenwirkt. Auf diese Weise wird eine Drehsicherung geschaffen, die so gewählt ist, daß durch sie die korrespondierenden Verzahnungen 38 und 40 automatisch so zueinander Positioniert werden, daß die Zähne der einen Verzahnung auf die Zwischenräume zwischen den Zähnen der anderen Verzahnung ausgerichtet sind. Das Ineinanderschieben der Verzahnungen 38 und 40, die zur Übertragung der großen Kräfte möglichst wenig Spiel aufweisen sollen, wird somit erheblich vereinfacht.

Die Seitenwand 18 des Schraubverschlusses 12 weist auf ihrer Innenseite, unterhalb des Absatzes 28 unter regelmäßigen Abständen umfangsmäßig angeordnete, radial verlaufende Ausnehmungen 50 auf, in die Nasen 52 einrasten, wodurch die Kappe 32 in einer Stellung auf dem Schraubverschluß 12 gesichert gehalten wird, in der die Verzahnungen 38 und 40 ineinandergreifen. Die Nasen 52 sind im gezeigten Beispiel jeweils an separaten Haltebügeln 54 angeordnet, die unter entsprechenden Abständen am Außenrand der Kappe 32 umfangsmäßig, nach unten abstehend angeformt sind. Damit die Haltebügel 54 federnd betätigbar sind, ist jeweils im radial nach innen an den Haltebügel 54 angrenzenden Bereich die Dicke der Kappe 32 durch eine Aussparung 56 verringert. Im gezeigten Beispiel ist die Rastverbindung zwischen Kappe 32 und Schraubverschluß 12 lösbar ausgebildet. Zu diesem Zweck sind die Ausnehmungen 50, in die die Nasen 52 einrasten, als durchgehende Öffnungen ausgestaltet, um so gegebenenfalls die Nasen 52 z.B. mit einem Dom aus ihrer Raststellung lösen zu können.

Durch den Zusammenbau der relativ kompliziert ausgebildeten Bauteile, Kappe 32 und Schraubverschluß 12, die jedoch beide im Spritzgußverfahren preiswert herstellbar sind, entsteht ein Kunststoff-Deckel 10, der als solcher nicht in Spritzgußtechnik herstellbar ist, z.B. aufgrund der zwischen Kappe 32 und Schraubverschluß 12 eingeschlossenen Hohlräume. Ein einteiliger, mit Spritzgußtechnik hergestellter Deckel 10 mit der gleichen Festigkeit müßte als Massivkörper ausgebildet sein, dessen Endpreis schon aufgrund der zusätzlichen Materialkosten zu hoch wäre.

## Patentansprüche

1. Kunststoff-Deckel für ein Filtergehäuse mit einem becherförmigen, auf das Filtergehäuse aufschraubbaren Abschnitt zum Verschließen des Filtergehäuses und einem Abschnitt zur Einleitung von Schraubkräften,
**dadurch gekennzeichnet,**
daß der Abschnitt zum Verschließen des Filtergehäuses und der Abschnitt zur Krafteinleitung als separate Bauteile ausgebildet sind, wobei der Abschnitt zum Verschließen des Filtergehäuses einen Schraubverschluß (12) bildet und der Abschnitt zur Krafteinleitung einteilig mit einer Kappe (32) gebildet ist, die mit dem Schraubverschluß (12) kraftschlüssig verbindbar ist.

2. Kunststoff-Deckel nach Anspruch 1, **dadurch gekennzeichnet**, daß zur kraftschlüssigen Verbindung von Kappe (32) und Schraubverschluß (12) an diesen Kraftübertragungsmittel (38) und (40) angeordnet sind.

3. Kunststoff-Deckel nach Anspruch 2, **dadurch gekennzeichnet**, daß die Kraftübertragungsmittel aus zusammenwirkenden Verzahnungen (38) und (40) bestehen.

4. Kunststoff-Deckel nach einem der Ansprüche 2 und 3, **dadurch gekennzeichnet**, daß die Kraftübertragungsmittel (38) und (40) unter möglichst großem radialen Abstand von der Schraubachse (58) des Deckels (10) angeordnet sind.

5. Kunststoff-Deckel nach einem der Ansprüche 2 bis 4, **dadurch gekennzeichnet**, daß zwischen der Kappe (32) und dem Schraubverschluß (12) Führungsmittel (42) und (44) zur axialen Ausrichtung der Kraftübertragungsmittel (38) und (40) vorgesehen sind.

6. Kunststoff-Deckel nach Anspruch 5, **dadurch gekennzeichnet**, daß die Führungsmittel aus einem auf die Außenseite des Schraubverschlusses (12) angeformten Rundbolzen (42) und aus einer diesen formschlüssig aufnehmenden Ausnehmung (44) in der Innenseite der Kappe (32) bestehen.

7. Kunststoff-Deckel nach einem der Ansprüche 2 bis 6, **dadurch gekennzeichnet**, daß zwischen der Kappe (32) und dem Schraubverschluß (12) Positioniermittel (46) und (48) zur winkligen Ausrichtung der Kraftübertragungsmittel (38) und (40) vorgesehen sind.

8. Kunststoff-Deckel nach den Ansprüchen 6 und 7, **dadurch gekennzeichnet**, daß die Positioniermittel aus einer am Rundbolzen (42) vorgesehenen Abflachung (46) und einer daran angepaßten Ausformung (48) der Ausnehmung (44) bestehen.

9. Kunststoff-Deckel nach einem der vorhergehenden Ansprüche, **dadurch gekennzeichnet**, daß Rastmittel (50) und (52) zur Verbindung von Kappe (32) und Schraubverschluß (12) vorgesehen sind.

10. Kunststoff-Deckel nach Anspruch 9, **dadurch gekennzeichnet**, daß die Rastmittel aus mehreren, entlang des Umfangs der Kappe (32) federnd angeordneten, radial abstehenden Nasen (52) bestehen, die in entsprechende, entlang des Umfanges des Schraubverschlusses (12) angeordnete Ausnehmungen (50) einrastbar sind.

11. Kunststoff-Deckel nach einem der vorhergehenden Ansprüche, **dadurch gekennzeichnet**, daß der Abschnitt zur Einleitung der Schraubkräfte aus einem zentrisch angeordneten, nach außen abstehenden Vielkant (34), insbesondere aus einem Sechskant, besteht.

## Claims

1. Plastics material lid for a filter housing with a cupular portion, which can be screwed onto the filter housing, for closing the filter housing and a portion for introducing screwing forces, characterised in that the portion for closing the filter housing and the portion for introducing forces are designed as separate components, wherein the portion for closing the filter housing forms a screw closure (12) and the portion for introducing forces is formed in one piece with a cap (32) which can be connected non-positively to the screw closure (12).

2. Plastics material lid according to claim 1, characterised in that for the non-positive connection of cap and screw closure (12) force transmitters (38) and (40) are arranged on these.

3. Plastics material lid according to claim 2, characterised in that the force transmitters consist of cooperating sets of teeth (38) and (40).

4. Plastics material lid according to one of claims 2 and 3, characterised in that the force transmitters (38) and (40) are arranged at the greatest possible radial distance from the screw axis (58) of the lid (10).

5. Plastics material lid according to one of claims 2 to 4, characterised in that guides (42) and (44) are provided between the cap (32) and the screw closure (12) for the axial alignment of the force transmitters (38) and (40).

6. Plastics material lid according to claim 5, characterised in that the guides consist of a circular pin (42) moulded onto the outside of the screw closure (12) and a recess (44) holding it in a positive lock on the inside of the cap (32).

7. Plastics material lid according to one of claims 2 to 6, characterised in that positioning means (46) and (48) are provided between the cap (32) and the screw closure (12) for the angled alignment of the force transmitters (38) and (40).

8. Plastics material lid according to claims 6 and 7, characterised in that the positioning means consist of a flattened area (46) provided on the circular pin (42) and a shaping (48) of the recess adapted thereto (44).

9. Plastics material lid according to one of the previous claims, characterised in that latching means (50) and (52) are provided to connect cap (32) and screw closure (12).

10. Plastics material lid according to claim 9, characterised in that the latching means consist of several catches (52) arranged resiliently along the periphery of the cap (32) and protruding radially, which can be latched into corresponding recesses (50) arranged along the periphery of the screw closure (12).

11. Plastics material lid according to one of the previous claims, characterised in that the portion for introducing the screw forces consists of a centrically arranged polygon (34) protruding outwards, in particular of a hexagon.

## Revendications

1. Couvercle en plastique pour boîtier de filtre, comprenant une partie en forme de godet vissable sur le boîtier de filtre pour la fermeture de celui-ci et une partie d'application de forces de vissage, caractérisé par le fait que la partie de fermeture du boîtier de filtre et la partie d'application de forces sont constituées d'éléments séparés, et la partie de fermeture du boîtier de filtre forme un bouchon fileté (12) et la partie d'application de forces est formée d'une seule pièce avec un capuchon (32) qui peut être joint par force au bouchon fileté (12).

2. Couvercle en plastique selon la revendication 1, caractérisé par le fait que pour la jonction par force du capuchon (32) au bouchon fileté (12), sur ceux-ci sont prévus des moyens de transmission de forces (38 et 40).

3. Couvercle en plastique selon la revendication 2, caractérisé par le fait que les moyens de transmission de forces sont constitués de dentures coopérantes (38 et 40).

4. Couvercle en plastique selon l'une des revendications 2 et 3, caractérisé par le fait que les moyens de transmission de forces (38 et 40) sont placés à une distance radiale aussi grande possible de l'axe de vissage (58) du couvercle (10).

5. Couvercle en plastique selon l'une des revendications 2 à 4, caractérisé par le fait qu'entre le capuchon (32) et le bouchon fileté (12) sont prévus des moyens de guidage (42 et 44) pour l'alignement axial des moyens de transmission de forces (38 et 40).

6. Couvercle en plastique selon la revendication 5, caractérisé par le fait que les moyens de guidage sont constitués d'une broche cylindrique (42) faite sur le côté extérieur du bouchon fileté (12) et d'un évidement (44) recevant celle-ci avec coopération de forme fait dans le côté intérieur du capuchon (32).

7. Couvercle en plastique selon les revendications 2 à 6, caractérisé par le fait qu'entre le capuchon (32) et le bouchon fileté (12) sont prévus des moyens de positionnement (46 et 48) pour l'alignement angulaire des moyens de transmission de forces (38 et 40).

8. Couvercle en plastique selon les revendications 6 et 7, caractérisé par le fait que les moyens de positionnement sont constitués d'un plat (46) prévu sur la broche cylindrique (42) et d'une forme (48) adaptée à celui-ci de l'évidement (44).

9. Couvercle en plastique selon l'une des revendications précédentes, caractérisé par le fait que des moyens d'encliquetage (50 et 52) sont prévus pour la jonction du capuchon (32) au bouchon fileté (12).

10. Couvercle en plastique selon la revendication 9, caractérisé par le fait que les moyens d'encliquetage sont constitués de plusieurs ergots saillant radialement (52) placés élastiquement le long du pourtour du capuchon (32) qui peuvent s'engager dans des évidements correspondants (50) placés le long du pourtour du bouchon fileté (12).

11. Couvercle en plastique selon l'une des revendications précédentes, caractérisé par le fait que la partie d'application des forces de vissage est constituée d'un polygone saillant vers l'extérieur et placé au centre (34), en particulier d'un hexagone.
